# EUROPEAN PATENT APPLICATION

(11) **EP 1 900 768 A1**
(43) Date of publication of application: **19.03.2008**
(21) Application number: 07015823.3
(22) Date of filing: 10.08.2007
(51) Int. Cl.: C08K 3/00, C08K 3/34, C08K 7/02

(54) **Wollastonite-based electrically-conductive reinforcing materials**

(30) Priority: 18.09.2006 US 522865
(71) Applicant: Nyco Minerals, Inc., Willsboro NY 12996-0368 (US)
(72) Inventor: Phillips, Gary Charles, Allen Park, MI 48101 (US); Davison, William Watson, Pacific Grove, CA 93950 (US)
(74) Representative: Wagner, Karl H.

(57) **Abstract**

A wollastonite-based electrically-conductive filler and reinforcing material, and methods of producing it. The material comprises milled wollastonite particles and an electrically-conductive media such as carbon black or silver or copper adhered to the wollastonite by a binder system. The material contributes both electrical conductivity and improved physical properties such as increased stiffness, increased tensile strength, and increased scratch resistance to materials for antistatic and electromagnetic shielding such as thermoplastic and thermosetting polymers, in a cost-effective manner relative to alternative prior art electrically-conductive and reinforcing materials.

## Description

### FIELD OF THE INVENTION

The present invention relates to filler materials for inclusion in polymer composites and coatings; more particularly, to such materials having electrical conductivity; and most particularly, to an improved conductive material combining particles of the mineral wollastonite with an electrically-conductive media and a binder, for use in increasing conductivity and reinforcement in thermoplastics, engineering plastics, polymer alloys, and blends. Such reinforcement improves strength modulus, tensile strength, impact resistance, coefficient of linera thermal expansion, and surface appearance.

### BACKGROUND OF THE INVENTION

Polymeric materials as are widely known for forming plastic objects are in general electric insulators. Examples of such engineering polymer materials are, among others, thermoplastic polyolefins, polyamides, polyimides, polysulfones, polyesters such as polyethyleneterephtalate, and polymer blends such as PPO/PPE, PBT, and PC/ABS.

In many polymer applications, it is known to increase the mechanical strength and durability of the polymer by addition of an acicular or fibrous material such as chopped fiberglass, talc, calcined clay, or wollastonite. Further, it is known to provide an electrically conductive primer to create automotive electrostatic coatings.

Wollastonite is a known filler material intermediate in both cost and reinforcement between fiberglass and other minerals. Wollastonite is a naturally occurring mineral comprising calcium, silicon, and oxygen in the molecular formula CaSiO₃ (calcium metasilicate). It is readily processed into a particulate form wherein the particulates exhibit an apsect ratio of between about 1 and about 20; that is, wollastonite particles can be produced with a markedly distinct average acicularity, making wollastonite an excellent polymer reinforcing material. It is well known commercially as a versatile functional filler that increases the performance of many products, including plastics, paints and coatings, construction materials, friction, ceramic, and metallurgical applications. It has found application as a non-hazardous substitute for chrysotile asbestos in fire-resistant building products. Native wollastonite has relatively low electrical conductivity.

A problem in the prior art is that many known acicular or fibrous additives and mineral fillers are non-conductive and therefore do nothing to lessen the dielectric or triboelectric properties of a polymer. In many applications, for example, electrostatics, electromagnetic shielding, and conductors, an object formed from a polymer is required to be electroconductive. Therefore, it is known in the art to incorporate conductive additives into the polymeric matrix. Typical conductive additives include carbon black, carbon fibers, metal coated fiberglass, and stainless steel fibers. Such additives all have drawbacks. Carbon black results in degradation of mechanical properties, and carbon fiber, metallized fiberglass, and stainless steel fibers have a high cost and are not easily processible. Frequently, carbon fiber is not readily available and is relatively costly.

Various approaches are known in the art for making reinforcing fibers conductive. Some examples follow.

US Patent No. 4,895,620 discloses a composition which is prepared so that it has a low electrical resistivity so that it can be used in electrostatic discharge operations. The composition includes carbon-coated organic fibers. The fiber is characterized in that it is a Lewis base while the carbon powder is a Lewis acid. The carbon-coated fiber is held together with a binder (such as a latex or resin). The binder may be either neutral or acidic. A resin can also be used to prepare rigid electrostatic discharge objects. When a resin is used, the resin should also be neutral and preferably, is acidic. The fiber is composed of material selected from the group consisting of: polyamides, polyesters, polyacrylates, polyethers, polyvinyl acetates, polyacrylonitriles, polycarbonates, polyethyl acetates, polylactones, and polyvinyl alcohol.

US Patent No. 6,331,586 discloses a conductive polymer blend comprising: (a) at least two polymers which are at least partially immiscible with each other, and are present in proportions such that each polymer forms a respective continuous phase and the two respective continuous polymer phases are co-continuous with each other in the polymer blend; and (b) at least one conductive material in particulate or fiber form which is substantially localized in one of the co-continuous polymer phases or substantially localized at a continuous interface between the co-continuous polymer phases. Optionally, the polymer blend may contain a mineral filler and/or a thixotropic thickening agent.

US Patent No. 6,559,384 discloses a conductive fiber comprising a fiber-forming polymer in combination with zinc oxide particles having a substantially rod shape comprising an elongated spherical shape.

US Patent No. 6,413,634 discloses an electrically conductive composite fiber composed of an electrically-conductive polyamide layer containing 15-50 wt % of electrically-conductive carbon black and which is three or more times exposed at the fiber surface and a protective polyamide layer which covers no less than 60% of the periphery of the fiber cross section and accounts for 50-97 wt % of the total fiber weight, does not exhibit component separation during spinning, retains its good initial conductive performance for a long period of time, and exhibits good color fastness.

US Patent No. 6,703,123 discloses a white conductive fiber that is manufactured at an inexpensive cost having superior conductivity and high degree of whiteness, in which a metal coating plated on the fiber has superior adhesiveness. A method for manufacturing the white conductive fiber comprises the steps of mounting a wound fiber body formed by winding a continuous fiber to the fixing shaft, a step of flowing a plating solution from the fixing shaft to a plating bath via the wound fiber body so as to infiltrate the plating solution into the wound fiber body, and a step of performing electroless plating of silver, platinum, or the like on the fiber material while the plating solution flows.

US Patent No. 6,710,242 discloses a sheath-core composite conductive fiber having a sheath component made of a fiber-forming polymer containing conductive carbon black. The fiber is characterized in that, with respect to an inscribed circle of a core component and an inscribed circle of a sheath component in a cross section of the fiber, a radius (R) of the inscribed circle of the sheath component and a distance (r) between the centers of two inscribed circles satisfy a specific relationship, and a sheath-core composite conductive fiber having: a core component made of a polyester containing ethylene terephthalate as a main component, and a sheath component made of a mixture of a copolyester wherein ethylene terephthalate accounts for 10 to 90 mol % of constituent units thereof and carbon black. The conductive fiber can be used alone or in combination with other fibers in various applications, e.g., special working clothes such as dust-free clothes and interiors such as carpets.

US Published Patent Application No 2003/0173550 discloses a process to produce an electrically conductive thermoplastic structure, comprising the steps of: (i) providing a thermoplastic polymer, an impact modifier, and a combination of a metal fiber and a metal-coated fiber to a melt blending apparatus, and (ii) forming an electrically conductive thermoplastic structure.

None of the above references provides instruction on forming a conductive particulate material, which may be acicular and therefore reinforcing, comprising a mineral substrate such as wollastonite.

US Patent No. 7,001,944, the relevant disclosure of which is incorporated herein by reference, discloses a mineral-filled, impact-resistant thermoplastic molding composition containing at least one resin selected from the group consisting of polycarbonate and polyester carbonate, impact resistance modifier, and wollastonite having carbon content greater than 0.1 % relative to the weight of the wollastonite. Exhibiting high modulus of elasticity and a good toughness, in particular at low temperatures, the composition is suitable for car body external applications.

This disclosure demonstrates the benefits of incorporating milled wollastonite into an organic resin for physically demanding applications; however, again there is no instruction in making the wollastonite filler electrically conductive.

What is needed in the art is a mineral-based, particulate reinforcing material which is electrically conductive.

What is further needed in the art is an electrically conductive reinforcing material wherein the particulate substrate comprises wollastonite.

It is a principal object of the present invention to provide the means for reinforcing polymeric structures with electrically -conductive mineral materials.

### SUMMARY OF THE INVENTION

Briefly described, the native mineral wollastonite (CaSiO₃) is milled into a particulate form which may be acicular. Powdered conductive media, such as carbon black or powdered metal, is applied to the surface of the wollastonite particles and a polymeric binder is applied to encapsulate the wollastonite and conductive media.

The resulting coated wollastonite particles have substantial electrical conductivity and therefore are useful, inexpensive filler for polymers in applications wherein antistatic properties are desirable. Such applications may include automotive exterior, interior, and under-hood complsites such as antistatic body exterior panels for electrostatic paint deposition; fuel storage and filling components, and the protection of under-hood and instrument panel electronics from electrostatic damage.

Other applications may include semiconductor handling and storage racks and tapes; surfaces and packaging for electrostatic dissipative sensitive materials and areas; flammable or explosive handling materials; and electromagnetic shielding structures.

Still further applications may include surface coatings or primers promoting conductivity for improved adhesion and increased mechanical strength; anti-static surface coatings for floors and wall coverings in microelectronic fabrication or handling areas; anti-static fabric additives for clothing and carpets; and conductive layer coatings for electrographic printing devices.

### DETAILED DESCRIPTION OF THE EMBODIMENTS

The following process for making a mineral-based conductive filler material for filling and/or reinforcing organic polymers is described in terms of the native mineral wollastonite; however, those of ordinary skill in the art will recognize that in some applications various other mineral substrates, such as talc or calcined clay, may be used instead of wollastonite, or in combination with wollastonite.

A first amount of the native mineral wollastonite is milled so as to retain its anisotropic crystal morphology, resulting in particles having a particulate length to width aspect ratio between about 1.0 and about 20.0; a mean particle width between about 1 µm and about 50 µm; and a mean particle length of up to about 1 mm.

A second amount of an electrically-conductive media is prepared in powder form. Preferably, the electrically- conductive media is selected from the group consisting of carbon black; metal powders of, for example, copper, nickel, silver, gold; or indium/tin oxide. Some suitable, commercially available carbon blacks include Cabot Vulcan XC72, available from Akrochem Corporation; Printex XE2, available from Degussa Chemical; and KetchenBlack EC 600, available from Akzo Chemicals.

A third amount of a binder is prepared in liquid form. Preferred binders are polymers having melting points less than about 100°C, and especially water-soluble polymers. Some examples of suitable binders are polyethylene glycol, polyvinyl alcohol, polycarbolane, and thermoplastic polyolefins in micronized powder or emulsion form; of course, other binders, as may occur to those of ordinary skill in the art, are fully comprehended by the invention. Sol-based non-polymer liquids, such as sodium silicate gel (water glass), are also suitable.

In a process for forming conductive particles of wollastonite, the wollastonite preferably (although not necessarily) is coated first with a silane undercoat to enhance subsequent bonding of the conductive powders to the surface of the wollastonite particles. Subsequent encapsulation of the wollastonite particles may proceed in one of two methods.

In a first method, the wollastonite particles are introduced into a reactor comprising a dry mixing apparatus such as a fluidized bed. The conductive media is mixed with an aqueous binder solution to form a sprayable mixture, and the mixture is sprayed onto the wollastonite particles. The water component is driven off, leaving the wollastonite particles coated with bound electrically-conductive particulates.

In a second method, the conductive media is mixed with the wollastonite particles in a reactor, and the binder, either neat or as an aqueous solution, is sprayed onto the mixture of wollastonite and conductive media.

Where the mixture of conductive media and binder is conveyed to the wollastonite in an aqueous solution, drying of the resultant material is accomplished in a fluidized bed-type reactor to a moisture content of between 0.2 and about 1.0 weight percent. The drying step is not necessary when the material is processed dry with the binder applied neat.

In the final product, the conductive media is present at between about 2% and about 25% of the weight of the wollastonite, and the binder is present at between about 1% and about 35% of the combined weights of the conductive media and the wollastonite.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A method for making a mineral-based conductive filler material for use in blending with organic polymers to enhance the mechanical strength and conductivity thereof, comprising the steps of:
a) preparing a first amount of a mineral substrate in particulate form;
b) preparing a second amount of an electrically-conductive media in powder form;
c) preparing a third amount of a binder material in liquid form;
d) combining said first and second amounts to form a dry mixture; and
e) spraying said binder material onto said dry mixture to adhere said electrically-conductive media to said mineral substrate.

2. A method in accordance with Claim 1 wherein said mineral substrate is selected from the group consisting of wollastonite, talc, calcined clay, and combinations thereof.

3. A method in accordance with Claim 1 wherein the form of said mineral substrate particulates is acicular.

4. A method in accordance with Claim 3 wherein said mineral substrate particulates have a length to width ratio between about 1:1 and about 20:1.

5. A method in accordance with Claim 3 wherein said mineral substrate particulates have a mean particle width between about 1 µm and about 50 µm and a mean particle length of up to about 1 mm.

6. A method in accordance with Claim 1 wherein said electrically-conductive media is selected from the group consisting of carbon black, metal powders of copper, nickel, silver, gold, and indium/tin oxide.

7. A method in accordance with Claim 1 wherein said binder is an organic polymer.

8. A method in accordance with Claim 7 wherein said organic polymer has a melting point less than about 100°C.

9. A method in accordance with Claim 7 wherein said organic polymer is selected from the group consisting of polyethylene glycol, polyvinyl alcohol, polycarbolane, thermoplastic polyolefins in micronized powder or emulsion form, and combinations thereof.

10. A method in accordance with Claim 7 wherein said organic polymer is water-soluble.

11. A method in accordance with Claim 1 wherein said step of preparing a third amount of a binder material in liquid form includes the step of dissolving said binder material in water.

12. A method in accordance with Claim 1 wherein said binder is an aqueous gel.

13. A method in accordance with Claim 12 wherein said aqueous gel includes sodium silicate.

14. A method for making a mineral-based conductive filler material for use in blending with organic polymers to enhance the mechanical strength and conductivity thereof, comprising the steps of:
a) preparing a first amount of a mineral substrate in particulate form;
b) preparing a second amount of an electrically-conductive media in powder form;
c) preparing a third amount of a binder material in liquid form;
d) combining said first and third amounts to form a media/binder mixture; and
e) spraying said media/binder mixture onto said mineral substrate to adhere said electrically-conductive media to said mineral substrate.

15. A mineral-based electrically conductive particulate material for use in blending with organic polymers to enhance the mechanical strength and electrical conductivity thereof, comprising a mineral substrate in particulate form and an electrically-conductive media adhered to the surface of said mineral substrate by a binder.

16. A material in accordance with Claim 15 wherein said mineral substrate is selected from the group consisting of wollastonite, talc, calcined clay, and combinations thereof.

17. A material in accordance with Claim 15 wherein said electrically-conductive media is selected from the group consisting of carbon black, metal powders of copper, nickel, silver, gold, and indium/tin oxide.

18. A material in accordance with Claim 15 wherein said binder is an organic polymer selected from the group consisting of polyethylene glycol, polyvinyl alcohol, and polycarbolane.

19. A material in accordance with Claim 15 wherein said binder is an aqueous gel.

20. A material in accordance with Claim 19 wherein said aqueous gel includes sodium silicate.

21. A material in accordance with Claim 15 wherein said conductive media is present at between about 2% and about 25% of the weight of said wollastonite, and said binder is present at between about 1% and about 35% of the combined weights of said conductive media and said wollastonite.
